(19) **Europäisches Patentamt / European Patent Office / Office européen des brevets**

(11) **EP 4 661 189 A1**

(12) **EUROPEAN PATENT APPLICATION**

(43) Date of publication:
**10.12.2025 Bulletin 2025/50**

(21) Application number: **25180216.1**

(22) Date of filing: **02.06.2025**

(51) International Patent Classification (IPC):
*H01M 50/403* (2021.01)    *H01M 10/0525* (2010.01)
*H01M 50/417* (2021.01)    *H01M 50/463* (2021.01)
*H01M 50/489* (2021.01)    *H01M 50/491* (2021.01)

(52) Cooperative Patent Classification (CPC):
**H01M 50/463; H01M 50/403; H01M 50/417;**
**H01M 50/489; H01M 50/491;** H01M 10/0525;
H01M 50/457

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **03.06.2024 KR 20240072491**

(71) Applicant: **SAMSUNG SDI CO., LTD.**
**Yongin-si, Gyeonggi-do 17084 (KR)**

(72) Inventors:
• **LEE, Su Jin**
 **16678 Gyeonggi-do (KR)**
• **YUN, Jun Seo**
 **16678 Gyeonggi-do (KR)**

(74) Representative: **Gulde & Partner**
 **Patent- und Rechtsanwaltskanzlei mbB**
 **Berliner Freiheit 2**
 **10785 Berlin (DE)**

(54) **SEPARATOR FOR RECHARGEABLE LITHIUM BATTERY, METHOD OF MANUFACTURING THE SAME, AND RECHARGEABLE LITHIUM BATTERY INCLUDING THE SAME**

(57)     Examples of the present disclosure include a separator for a rechargeable lithium battery, a method of manufacturing the separator, an electrode assembly for a rechargeable lithium battery including the separator, and a rechargeable lithium battery including the separator. Examples of the present disclosure include a separator for a rechargeable lithium battery, the separator including a first area, and a second area located at each of both ends of the first area, wherein :Thickness increase rate of second area > MD heat shrinkage rate of second area, and :Thickness increase rate of second area > TD heat shrinkage rate of second area.

**FIG 1.**

EP 4 661 189 A1

**Description**

CROSS-REFERENCE TO RELATED APPLICATION

The present application claims the benefit of priority to Korean Patent Application No.10-2024-0072491, filed on June 3, 2024 in the Korean Intellectual Property Office, the entire disclosure of which is incorporated herein by reference.

BACKGROUND

1. Field of the Invention

Examples of the present disclosure relate to a separator for a rechargeable lithium battery, a method of manufacturing the separator, and a rechargeable lithium battery including the separator.

2. Discussion of Related Art

With increasing presence of electronic devices using batteries, such as, e.g., mobile phones, laptop computers, electric vehicles, and the like, the demand for secondary batteries with high energy density and high capacity is increasing. Therefore, improving the performance of rechargeable lithium batteries may be advantageous.

A rechargeable lithium battery is typically a battery that includes a positive electrode and a negative electrode that include an active material capable of the intercalation and deintercalation of lithium ions, and that produces electrical energy by oxidation and reduction reactions when the lithium ions are intercalated into and deintercalated from the positive electrode and the negative electrode.

SUMMARY OF THE INVENTION

One example embodiment includes a separator for a rechargeable lithium battery having an overhang area in which heat shrinkage is reduced or suppressed after impregnation with an electrolyte and heat exposure.

Another example embodiment includes a method of manufacturing a separator for a rechargeable lithium battery.

Still another example embodiment includes a rechargeable lithium battery including the separator for a rechargeable lithium battery.

According to one example embodiment, a separator for a rechargeable lithium battery includes a first area, and a second area located at each of both ends of the first area, wherein the second area satisfies relationships of Expressions 1 and 2 below:

Thickness increase rate of second area > MD heat shrinkage rate of second area                    Expression 1:

Expression 2: Thickness increase rate of second area > TD heat shrinkage rate of second area.           Expression: 2

In Expressions 1 and 2, the MD heat shrinkage rate of the second area, the TD heat shrinkage rate of the second area, and the thickness increase rate of the second area are each heat shrinkage rates measured after impregnating the separator with an electrolyte at 140 °C for 1 hour.

According to another example embodiment, a method of manufacturing a separator for a rechargeable lithium battery includes manufacturing the separator for a rechargeable lithium battery by pressing only a portion of a separator film where a second area is to be formed.

According to still another example embodiment, a rechargeable lithium battery includes a positive electrode, a negative electrode, and the separator for a rechargeable lithium battery is located between the positive electrode and the negative electrode.

BRIEF DESCRIPTION OF THE DRAWINGS

The following drawings attached to the present specification illustrate example embodiments of the present invention, and serve to further understand the technical spirit of the present disclosure together with the detailed description of the present disclosure to be described below, and thus the present disclosure should not be construed as being limited to details illustrated in the accompanying drawings, in which:

FIG. 1 is a plan view illustrating an overhang area in a separator for a rechargeable lithium battery;

FIG. 2 is a plan view illustrating an overhang area in a separator for a rechargeable lithium battery;

FIG. 3 is a cross-sectional view illustrating a separator for a rechargeable lithium battery according to one example embodiment;

FIG. 4 is a cross-sectional view of an electrode assembly for a rechargeable lithium battery according to one example embodiment;

FIG. 5 is a picture of a separator (left) after pressing and a separator (right) before pressing; and

FIGS. 6 to 9 are cross-sectional views schematically illustrating a rechargeable lithium battery according to one example embodiment.

DETAILED DESCRIPTION

Hereinafter, example embodiments of the present disclosure are described in detail. However, the embodiments are presented as examples, the present disclosure is not limited to the example embodiments, and the present disclosure is only defined by the scope of the appended claims.

Unless otherwise stated herein, when a part such as a layer, a membrane, an area, a plate, etc. is described as being disposed "on" another part, it includes not only a case where the part is "directly on" another part, but also a case where there are other parts therebetween.

Unless otherwise stated herein, the singular may also include the plural. In addition, unless otherwise stated, "A or B" may mean "including A, including B, or including A and B."

In the present specification, "a combination thereof" may mean a mixture, stack, composite, copolymer, alloy, blend, and reaction product of constituents.

Unless otherwise defined herein, a particle diameter may be an average particle diameter. In addition, the particle diameter is an average particle diameter D50, which refers to the diameter of particles with a cumulative volume of 50% by volume in the particle size distribution. The average particle diameter D50 may be measured by methods known to those skilled in the art, for example, measured using a particle size analyzer or measured using a transmission electron micrograph or a scanning electron micrograph. As another method, the particle size distribution may be measured using a measurement device using dynamic light scattering, and an average particle diameter D50 value may be obtained by performing data analysis, counting the number of particles in each particle size range, and then calculating the D50 value therefrom. Alternatively, the particle size distribution may be measured using a laser diffraction method. When measuring the average particle diameter by the laser diffraction method, for example, the average particle diameter D50 based on 50% of a particle diameter distribution in the measuring device may be calculated by dispersing particles to be measured in a dispersion medium, then introducing the dispersion medium into a commercially available laser diffraction particle diameter measuring device (e.g., Microtrac's MT 3000), and radiating ultrasonic waves of about 28 kHz at an output power of 60 W.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

In the present specification, "heat shrinkage rate" was obtained as an average value after measuring 10 samples of the separator that are randomly obtained. In the present specification, each "heat shrinkage rate" may be a value measured by a method in an experimental example below.

In the present specification, "thickness increase rate" was obtained as an average value after measuring groups of 10 samples of the separator, which are randomly obtained, 10 times at arbitrary locations in an overhang area. In the present specification, each "thickness increase rate" may be a value measured by a method in an experimental example below.

In the present specification, "mechanical direction (MD)" and "transverse direction (TD)" for a separator may each be substantially the same direction as an MD and TD of a porous substrate in the separator.

Below, the present invention will be described with a focus on lithium secondary batteries. However, the present invention can also be applied to secondary batteries other than lithium secondary batteries.

A separator for a rechargeable lithium battery according to one example embodiment includes a first area and a second area located at each of both ends of the first area. The second area is located at each of both ends of the first area in a width direction of the separator.

According to one example embodiment, the first area and the second area may be formed integrally. Here, "integrally formed" means that the first area and the second area are not bonded by an adhesive layer or a bonding layer and are not readily separated by a physical force.

According to one example embodiment, the second area may be or include an overhang area in an electrode assembly for a rechargeable lithium battery. The overhang area may be or include an area of a separator, which is not in contact with an electrode.

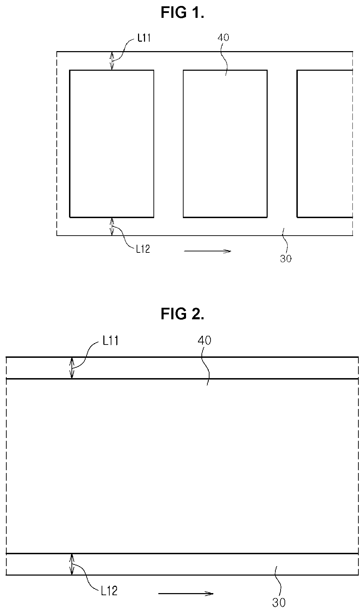

The overhang area is described with reference to FIG. 1 and FIG. 2.

FIG. 1 and FIG. 2 are a plan view illustrating an overhang area in a separator for a rechargeable lithium battery. FIG. 1 is a plan view illustrating an electrode 40 partially stacked on a separator 30. FIG. 2 is a plan view illustrating an electrode 40 extended in one direction and stacked on a separator 30.

Referring to FIG. 1 and FIG. 2, the overhang area is an area of the separator 30, which is not in contact with the electrode (a positive electrode or a negative electrode) 40.

Because the overhang area is an area that is not in contact with the electrode, when a battery is exposed to a high temperature environment, a boundary between the electrode and the overhang area may gradually become shorter due to, e.g., heat shrinkage. In particular, because a TD of the separator has a short gap between both ends of the separator and an end of the electrode, as illustrated in FIG. 1 and FIG. 2, when the battery is exposed to the high temperature environment, the separator shrinks to cause the boundary between the electrode and the overhang area to gradually shorten, resulting in an internal short, which may cause a deterioration in the stability and reliability of the battery.

In the separator according to one example embodiment, the second area satisfies the relationships of Expressions 1 and 2 below:

Expression 1: Thickness increase rate of second area > MD heat shrinkage rate of second area $\qquad$ Expression: 1

Expression 2: Thickness increase rate of second area > TD heat shrinkage rate of second area. $\qquad$ Expression: 2

In Expressions 1 and 2, the MD heat shrinkage rate of the second area, the TD heat shrinkage rate of the second area, and the thickness increase rate of the second area are each heat shrinkage rates measured after impregnating the separator with an electrolyte at 140 °C for 1 hour.

As described in the method of manufacturing a separator for a rechargeable lithium battery below, the second area is manufactured by pressing a separator film. The separator film may include only a porous substrate, or may include a coating layer formed on one surface, or on both surfaces, of the porous substrate.

The pressing is for applying a predetermined pressure to the porous substrate in a thickness direction. Therefore, the pressing can increase residual stress in the thickness direction compared to MD and TD among the pressure experienced by the porous substrate. This may further increase the degree to which the residual stress in the thickness direction is relieved compared to the MD and TD of the second area when the separator is impregnated with an electrolyte and exposed to heat, thereby increasing the thickness increase rate of the second area compared to each of the MD heat shrinkage rate and the TD heat shrinkage rate of the second area, as indicated in Expressions 1 and 2.

When the battery is left at high temperature, it may be preferable to have a low MD shrinkage rate and TD shrinkage rate, especially a low TD shrinkage rate of the overhang area in the separator to hinder or prevent an internal short. Therefore, because the second area satisfies Expressions 1 and 2, when the battery is exposed to high temperature, the MD and TD heat shrinkage rates of the overhang area can be significantly reduced, thereby hindering or preventing an internal short and increasing the stability of the battery.

In one example embodiment, the thickness increase rate of the second area may range from about 5% to about 70%, for example, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70%, from 12% to 57%.

In one example embodiment, because the TD heat shrinkage rate in the second area is lower than the MD heat shrinkage rate, this may be advantageous in hindering or preventing an internal short, and increasing the stability of the battery, when the battery is exposed to high temperature. For example, the second area may have a TD heat shrinkage rate ranging from about 3% to about 20%, for example, 3, 4, 5, 6, 7, 8, 9, 10, 11, 12, 13, 14, 15, 16, 17, 18, 19, 20%, from 5% to 15% and an MD heat shrinkage rate ranging from 5% to 25%, for example, 3, 4, 5, 6, 7, 8, 9, 10, 11, 12, 13, 14, 15, 16, 17, 18, 19, 20%, from 7% to 20%.

In one example embodiment, the first area may have a thickness increase rate and a heat shrinkage rate that differ from the thickness increase rate and the heat shrinkage rate of the second area.

The second area may be thinner than the first area. This may be due to the second region being manufactured by the pressing.

According to one example embodiment, a thickness of the second area may range from about 30% to about 90%, for example, 30, 35, 40, 45, 50, 55, 60, 65, 70, 75, 80, 85, 90%, from 60% to 70% of a thickness of the first area. Within the above range, it is possible to hinder or prevent rupture of the separator and tearing at a boundary between the first area and the second area due to an excessively thin second area and reduce or prevent a problem of hindering the MD and TD heat shrinkage rates reduction effect due to an excessively thick second area.

According to one example embodiment, the first area may have a thickness ranging from about 1 $\mu$m to about 100 $\mu$m, for example, from 5 $\mu$m to 20 $\mu$m, and the second area may have a thickness ranging from about 0.3 $\mu$m to about 90 $\mu$m, for example, from 3.5 $\mu$m to 18 $\mu$m.

FIG. 2 is a cross-sectional view illustrating a separator for a rechargeable lithium battery, according to one example embodiment.

Referring to FIG. 2, the separator 30 for a rechargeable lithium battery may include a first area 31 and a second area 32 formed integrally with the first area 31 and located at each of both ends of the first area. A thickness of the second area 32 may be smaller than a thickness of the first area 31.

According to one example embodiment, a width L11 or L12 of the second area 32 of a total width (L21+L11+L12) of the separator 30 may be, for example, in a range of more than about 0% and about 10% or less, for example, may range from 1% to 5%. Within the above range, it is possible to increase the economic efficiency of the battery by increasing a width L21 of the first area 31 in which the electrodes are disposed to face to an electrode each other, and reduce an internal short when the battery is exposed to high temperature by reducing the heat shrinkage rate of the second area.

According to one example embodiment, the first area may be or include an area disposed to face to an electrode each other.

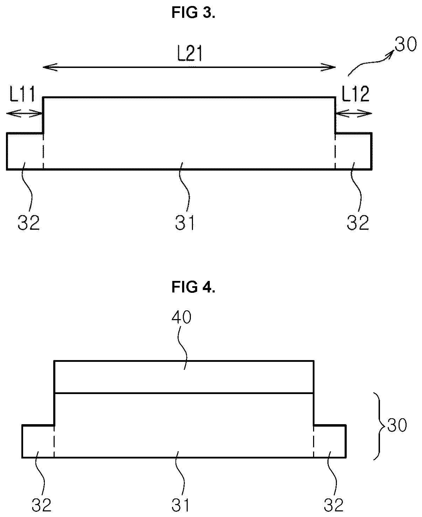

According to one example embodiment, the first area and the second area may have different hazes. This may be due to the fact that while the second area becomes transparent due to pores of the porous substrate being blocked as the second area is manufactured by pressing as described below, the first area is an area not pressed and becomes opaque due to pores causing light scattering. This is shown in FIG. 4, as further discussed below.

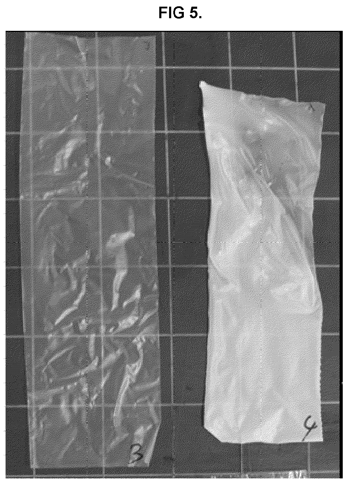

FIG. 5 is a picture of a separator (left) after pressing and a separator (right) before pressing. Referring to FIG. 5, before pressing, the separator is opaque due to high haze, but after the pressing, the separator becomes more transparent compared to before the pressing.

According to one example embodiment, the separator may be composed of, or include, only the porous substrate.

According to another example embodiment, the separator may include the porous substrate, and a heat-resistant layer formed on at least one surface of the porous substrate.

According to still another example embodiment, the separator may include the porous substrate, a heat-resistant layer formed on at least one surface of the porous substrate, and an adhesive layer formed on one surface of the heat-resistant layer.

According to still another example embodiment, the separator may include the porous substrate, and a heat-resistant adhesive layer formed on at least one surface of the porous substrate.

The porous substrate may be or include a substrate having multiple pores and commonly included in electrochemical devices. The porous substrate may be or include, but is not limited to, a polymer membrane formed of or including any one polymer such as or including at least one of a polyolefin such as polyethylene or polypropylene, polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more types thereof.

The porous substrate may be or include, for example, a polyolefin-based substrate including a polyolefin. The polyolefin-based substrate may have a desired or improved shutdown function, thereby contributing to improving the safety of the battery. The polyolefin-based substrate may be or include, for example, at least one of a polyethylene single film, a polypropylene single film, a polyethylene/polypropylene double film, a polypropylene/polyethylene/polypropylene triple film, and a polyethylene/polypropylene/polyethylene triple film. In addition, the polyolefin-based resin may include a non-olefin resin in addition to an olefin resin or include a copolymer of olefin and non-olefin monomers.

The porous substrate may have a thickness ranging from about 1 $\mu$m to about 40 $\mu$m, for example, from 1 $\mu$m to 30 $\mu$m, from 1 $\mu$m to 20 $\mu$m, or from 5 $\mu$m to 15 $\mu$m.

According to one example embodiment, the porous substrate may have a porosity ranging from about 5% to about 95%. For example, the porous substrate may have a porosity ranging from 30% to 50%, for example, from 30% to 40%. Within the above range, the residual stress in the thickness direction can be further increased by the pressing to be described below to readily satisfy Expressions 1 and 2.

The "porosity" may be a value measured by common methods known to those skilled in the art. For example, after the porous substrate was cut into samples with a size of 10 cm×10 cm (width×length), a volume (cm$^3$) and mass (g) of each sample was obtained, and the porosity was calculated using Equation 3 below from the above volume and mass and a density (g/cm$^3$) of the porous substrate.

Equation 3:

Porosity (%) = (volume-mass / density of sample) / volume × 100

(e.g., density of sample = density of polyethylene)

According to one example embodiment, the porous substrate may be or include an MD stretched film, a TD stretched film, or a MD and TD stretched film.

According to one example embodiment, the porous substrate may include a polymer having a weight average molecular weight ranging from about 3,000 g/mol to about 500,000 g/mol. Within the above range, the above-described overhang area can be readily implemented. The weight average molecular weight may be obtained as a polystyrene-converted value by gel permeation chromatography.

The heat-resistant layer is known to those skilled in the art and may include a typical binder contained in the heat-resistant layer of the separator. The heat-resistant layer may further include organic and/or inorganic ceramics. The organic and/or inorganic ceramics are known to those skilled in the art, and typical types thereof contained in the heat-resistant layer of the separator may be used.

The adhesive layer is known to those skilled in the art and may include a typical adhesive binder contained in the adhesive layer of the separator. The adhesive binder may include one or more of a core-shell type adhesive binder and a non-core-shell type adhesive binder.

The heat-resistant adhesive layer is known to those skilled in the art and may include a typical heat-resistant binder and adhesive binder contained in the heat-resistant adhesive layer of the separator.

An electrode assembly for a rechargeable lithium battery according to one example embodiment includes the separator for a rechargeable lithium battery, and an electrode stacked on the first area of the separator for a rechargeable lithium battery.

FIG. 4 is a cross-sectional view of an electrode assembly for a rechargeable lithium battery, according to one example embodiment.

Referring to FIG. 4, the electrode assembly for a rechargeable lithium battery may include the separator 30 for a rechargeable lithium battery, which includes the first area 31 and the second area 32 formed integrally with the first area 31 and located at each of both ends of the first area, and the electrode 40 stacked on the first area 31.

The electrode 40 may be a positive electrode or a negative electrode, which is described below.

The electrode 40 may be formed by coating the first area 31 of the separator 30 for a rechargeable lithium battery with an electrode slurry, and drying the electrode slurry. Alternatively, although not illustrated in FIG. 4, the electrode 40 may be stacked on the first area 31 by an adhesive layer.

According to one example embodiment, a method of manufacturing a separator for a rechargeable lithium battery includes manufacturing a separator for a rechargeable lithium battery by pressing only a portion corresponding to a second area of a separator film.

According to one example embodiment, the separator film may be or include the above-described porous substrate alone.

According to another example embodiment, the separator film may include the porous substrate, and a heat-resistant layer formed on at least one surface of the porous substrate.

According to still another example embodiment, the separator film may include the porous substrate, a heat-resistant layer formed on at least one surface of the porous substrate, and an adhesive layer formed on one surface of the heat-resistant layer.

Detailed description thereof is the same as the above description, and thus is omitted.

The pressing is performed only on the portion corresponding to the second area of the separator film. A portion that has not been pressed may be the first area of the separator.

The pressing may vary depending on the thickness of the separator film, particularly, a thickness of the porous substrate, but may be performed by pressing only the portion corresponding to the second area in the thickness direction under a linear pressure ranging from about 0.01 ton/cm to about 10 ton/cm. The linear pressure may be obtained according to definitions known to those skilled in the art. The linear pressure may be implemented by controlling a roll press to be described below to press only the portion that becomes an overhang area of the separator film.

In one example embodiment, the maximum pressure, for example, the linear pressure during pressing, may be applied so that a thickness of the separator and a thickness of the overhang area before the pressing satisfy the equation below:

$$\text{Thickness of overhang area} = \text{thickness of separator before pressing} \times (1 - (\text{porosity}/100)). \qquad \text{Equation 4:}$$

In Equation 4, the porosity is the porosity of separator before pressing (units: %).

When Equation 4 above is satisfied, because pores in the separator are removed, the separator becomes transparent, and it may be determined whether the overhang area has been formed.

In one example embodiment, the porosity may range from about 5% to about 95%.

The pressing may be performed using a typical roll press. A cross-sectional shape of the roll press is not limited, but may be square or curved to hinder or prevent a boundary between the first and second areas from being broken.

In one example embodiment, the pressing may be performed at room temperature, for example, about 20 °C to about 25 °C.

In another example embodiment, the pressing may be performed at high temperature. Pressing at high temperature may further reduce the MD heat shrinkage rate and TD heat shrinkage rate of the second area.

The high temperature may be determined according to the melting point, or melting temperature, of the porous substrate. Generally, the high temperature may be a temperature that is equal to or below the melting point, or melting temperature, of the porous substrate. For example, the high temperature may be a temperature that is equal to or below the melting point, or melting temperature, of the porous substrate, for example, lower than the melting point of the porous substrate by 10 °C (melting temperature of the porous substrate -10 °C) or, for example, lower than the melting point of the porous substrate by 20 °C (melting temperature of the porous substrate - 20 °C).

### Rechargeable lithium battery

According to one example embodiment, the rechargeable lithium battery includes the separator for a rechargeable lithium battery, a positive electrode, and a negative electrode.

The separator for rechargeable lithium battery refers to the description described above. The separator for rechargeable lithium battery may be positioned between the positive electrode and the negative electrode.

### Positive electrode

A positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can be configured as a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $LiaFePO_4$ ($0.90 \leq a \leq 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of about 90 wt% to about 99.5 wt% based on 100 wt% of the positive electrode active material layer. Amounts of the binder and the conductive material may be in a range of about 0.5 wt% to about 5 wt%, respectively, based on 100 wt% of the positive electrode active material layer.

The binder is configured to attach the positive electrode active material particles to each other, and to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminum, silver, etc., in a form of a metal powder or a metal fiber; a conductive polymer such as a polyphenylene derivative; or a mixture thereof.

Al may be included as the current collector, but is not limited thereto.

Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

The binder may be configured to attach the negative electrode active material particles to each other and also to attach the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be included to impart conductivity (e.g., electrical conductivity) to the electrode. Any material that does not cause chemical change (e.g., that does not cause an undesirable chemical change in the rechargeable lithium battery), and that conducts electrons, can be included in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in the form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may be configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on their shape.

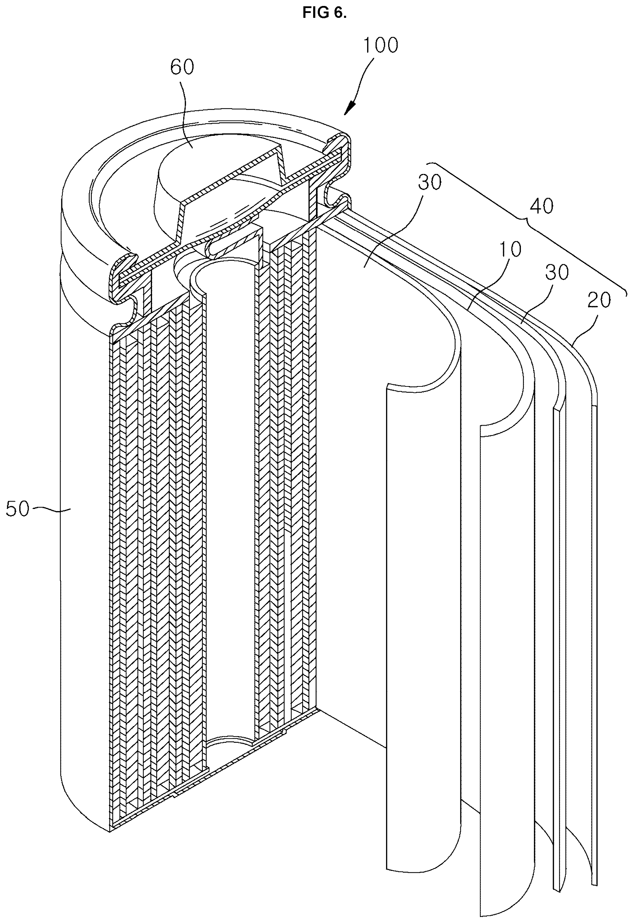

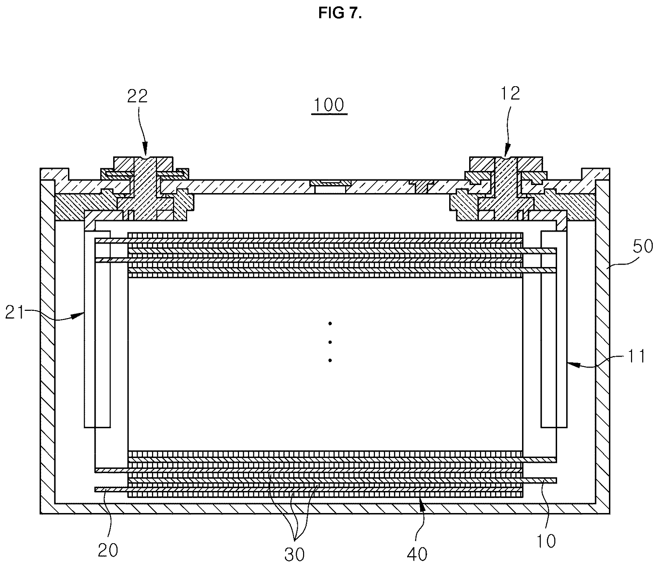

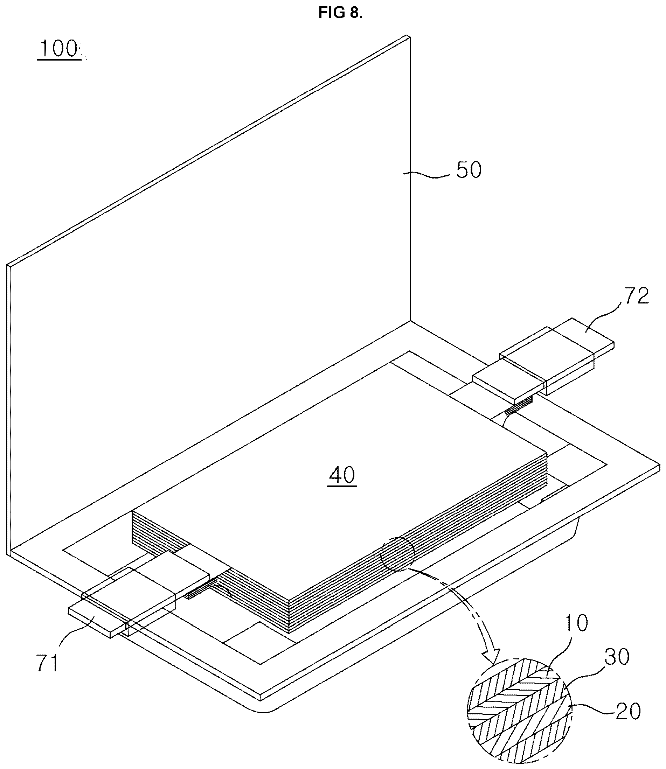

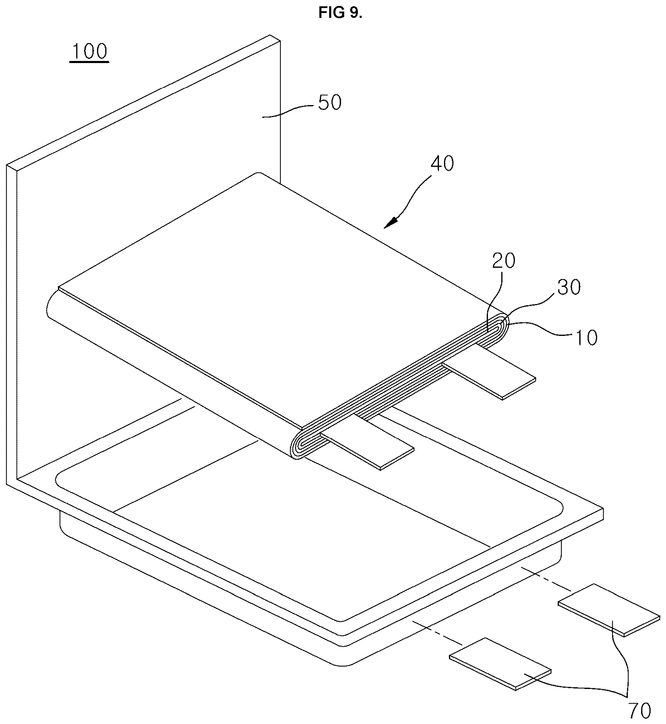

FIGS. 6 to 9 are schematic views illustrating a rechargeable lithium battery, according to an example embodiment. FIG. 6 illustrates a cylindrical battery, FIG. 7 illustrates a prismatic battery, and FIGS. 8 and 9 illustrate pouch-type batteries. Referring to FIGS. 6 to 9, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as illustrated in FIG. 6. In FIG. 7, the rechargeable lithium battery 100 may include a positive lead tab 11, a positive terminal 12, a negative lead tab 21, and a negative terminal 22. As illustrated in FIGS. 8 and 9, the rechargeable lithium battery 100 may include an electrode tab 70 illustrated in FIG. 9, which may be, for example, a positive electrode tab 71 and a negative electrode tab 72 illustrated in FIG. 8, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure is described. However, the following examples are merely example embodiments of the present invention, and the present disclosure is not limited to the following examples.

Measurement of MD and TD heat shrinkage rates after impregnation with electrolyte and heat exposure of overhang area:
Samples were manufactured by cutting the separator including the first and second areas manufactured in the following Examples and Comparative Examples into a rectangular shape with an MD of 100 mm. The size of the overhang area of the sample was 100 mm×10mm (MD×TD).

A positive electrode slurry was prepared by mixing 97 wt% LiCoNiAl as a positive electrode active material, 1.5 wt% carbon nanotubes, and 1.5 wt% polyvinyl fluoride as a conductive material and adding water thereto. A positive electrode was manufactured by applying the prepared positive electrode slurry on aluminum foil and drying and rolling the prepared positive electrode slurry. A negative electrode active material slurry was prepared by mixing 97.4 wt% negative electrode active material, 1.0 wt% carboxymethyl cellulose, 1.5 wt% styrene-butadiene-based rubber, and 0.1 wt% carbon nanotubes as a conductive material. A silicon-based negative electrode active material was included as the negative electrode active material. A negative electrode was manufactured by applying the prepared negative electrode slurry on aluminum foil and drying and rolling the prepared negative electrode slurry.

One sample was located between the positive electrode and the negative electrode to form three sets of positive electrode-sample-negative electrode laminates, which were then put in a pouch. 2 g of an electrolyte (solution of ethylene carbonate, ethyl methyl carbonate, and dimethyl carbonate (a volume ratio of 30:50:20) in which 1.5M $LiPF_6$ was dissolved) was injected to completely saturate the laminate with the electrolyte, which was sealed, left at 25 °C for 12 hours, and then left in an oven at 140 °C for 1 hour.

The sample was taken out of the pouch, and MD and TD heat shrinkage rates were calculated according to the equation below. The MD and TD heat shrinkage rates were obtained as an average value after measuring 10 samples of the separator that are randomly obtained.

Equation:

$$\text{Shrinkage rate} = (L0–L1) / L0 \times 100;$$

L0 denotes an initial length of the overhang area, and L1 denotes a length of the overhand area after being left at 140 °C for 1 hour in the electrolyte.

Measurement of thickness increase rate after impregnation with electrolyte and heat exposure of overhang area:
A thickness of the overhang area was measured. The same method as the measurement of the heat shrinkage rate of the overhang area was performed, and the thickness of the overhang area was measured. The thickness increase rate was calculated according to the equation below. The thickness increase rate was obtained as an average value after measuring each of 10 samples of the separator, which are randomly obtained, 10 times at arbitrary locations in the overhang area.

Equation:

$$\text{Thickness increase rate} = (T1–T0) / T1 \times 100;$$

T0 denotes an initial length of the overhang area, and T1 denotes a thickness of the overhand area after being left at 140 °C for 1 hour in the electrolyte.

The thickness was measured using a Litematic measurement device (VL-50, Mitutoyo).

Hereinafter, in examples, "pressure 1" is 0.5 ton/cm, "pressure 2" is 1 ton/cm, and "pressure 3" is 2 ton/cm, and these are linear pressures.

Example 1

A separator in which a first area and a second area (overhang area) were formed was manufactured by pressing only an area (area from one end of a polyethylene film in TD to 10 mm) of the polyethylene film (PE, W-SCOPE, porosity: 30%, thickness: 15 $\mu$m) where the overhang area was to form at room temperature (25 °C) under a condition of "pressure 1" using a roll press.

## Examples 2 to 12

Separators in which a first area and a second area (overhang area) were formed were manufactured in the same manner as in Example 1, with a difference that the processing conditions for the polyethylene film were changed as illustrated in Table 1 below.

## Comparative Example 1

A separator used a polyethylene film because an area of the polyethylene film (PE, W-SCOPE, porosity: 30%, thickness: 15 $\mu$m) where an overhang area was to be formed was not pressed at "pressure 1" as in Example 1.

## Comparative Example 2

A separator (thickness: 14 $\mu$m, thickness of polyethylene film: 7 $\mu$m, total thickness of a coating layer: 7 $\mu$m, the coating layer includes a ceramic and a heat-resistant binder) in which the coating layer was coated on both surfaces of the polyethylene film as a commercially available product was used.

## Comparative Example 3

A separator (thickness: 14 $\mu$m, thickness of polyethylene film: 7 $\mu$m, total thickness of a coating layer: 7 $\mu$m, the coating layer includes a heat-resistant layer including a ceramic and a heat-resistant binder and an adhesive layer stacked on the heat-resistant layer and including an adhesive binder) in which the coating layer was coated on both surfaces of the polyethylene film as a commercially available product was used.

In Table 1 below, the units of each of TD and MD are millimeters (mm), and the units of thickness are micrometers ($\mu$m).

Table 1:

| | Processing conditions | | Overhang area before impregnation with electrolyte and heat exposure | | | Overhang area after impregnation with electrolyte and heat exposure | | | Heat shrinkage rate (%) of overhang area after impregnation with electrolyte and heat exposure | | Thickness increase rate (%) of overhang area after impregnation with electrolyte and heat exposure |
|---|---|---|---|---|---|---|---|---|---|---|---|
| | Temperature | Pres sure | TD | MD | Thickness | TD | MD | Thickness | TD | MD | |
| Example 1 | 25°C | Pres sure 1 | 10 | 100 | 11.6 3 | 8.31 | 79.38 | 16.7 4 | 16.9 5 | 20.6 2 | 44.01 |
| Example 2 | 25°C | Pres sure 2 | 10 | 100 | 11.1 3 | 8.38 | 79.59 | 17.5 2 | 16.2 2 | 20.4 1 | 57.40 |
| Example 3 | 25°C | Pres sure 3 | 10 | 100 | 10.8 8 | 8.67 | 81.05 | 15.7 6 | 13.3 1 | 18.9 5 | 44.88 |
| Example 4 | 80°C | Pres sure 1 | 10 | 100 | 11.6 0 | 8.81 | 84.88 | 15.5 1 | 11.8 7 | 15.1 2 | 33.68 |
| Example 5 | 80°C | Pres sure 2 | 10 | 100 | 11.1 2 | 8.82 | 85.14 | 14.8 1 | 11.7 9 | 14.8 6 | 33.15 |

(continued)

| | Processing conditions | | Overhang area before impregnation with electrolyte and heat exposure | | | Overhang area after impregnation with electrolyte and heat exposure | | | Heat shrinkage rate (%) of overhang area after impregnation with electrolyte and heat exposure | | Thickness increase rate (%) of overhang area after impregnation with electrolyte and heat exposure |
|---|---|---|---|---|---|---|---|---|---|---|---|
| | Temperature | Pres sure | TD | MD | Thicknes s | TD | MD | Thicknes s | TD | MD | |
| Example 6 | 80°C | Pres sure 3 | 10 | 100 | 10.8 9 | 9.01 | 86.10 | 14.0 3 | 9.88 | 13.9 0 | 28.88 |
| Example 7 | 110°C | Pres sure 1 | 10 | 100 | 11.6 2 | 9.26 | 89.88 | 13.9 6 | 7.37 | 10.1 2 | 20.11 |
| Example 8 | 110°C | Pres sure 2 | 10 | 100 | 11.1 1 | 9.22 | 90.14 | 13.3 7 | 7.79 | 9.86 | 20.31 |
| Example 9 | 110°C | Pres sure 3 | 10 | 100 | 10.8 5 | 9.31 | 90.60 | 12.8 6 | 6.88 | 9.40 | 18.53 |
| Example 10 | 120°C | Pres sure 1 | 10 | 100 | 11.5 8 | 9.33 | 91.45 | 13.5 7 | 6.70 | 8.55 | 17.18 |
| Example 11 | 120°C | Pres sure 2 | 10 | 100 | 11.0 9 | 9.36 | 91.54 | 13.5 7 | 6.41 | 8.46 | 22.41 |
| Example 12 | 120°C | Pressure 3 | 10 | 100 | 10.8 3 | 9.47 | 92.14 | 12.7 3 | 5.26 | 7.86 | 17.52 |
| Comparative Example 1 | - | - | 10 | 100 | 15 | 6.83 | 67.88 | 18.6 5 | 31.6 8 | 32.1 2 | 24.32 |
| Comparative Example 2 | - | - | 10 | 100 | 14 | 6.80 | 67.88 | 18.6 5 | 32.0 5 | 32.1 2 | 17.37 |
| Comparative Example 3 | - | - | 10 | 100 | 14.0 3 | 5.56 | 62.60 | 16.4 7 | 44.4 0 | 37.4 0 | 17.39 |

As illustrated in Table 1, it can be seen that the separators for a rechargeable lithium battery of the Examples satisfy Expressions 1 and 2. Therefore, the separators of the Examples can hinder or prevent a short between the separator and the electrode by having the overhang area in which MD heat shrinkage and TD heat shrinkage are reduced or suppressed after impregnation with the electrolyte and heat exposure.

On the other hand, the separators of the Comparative Examples do not satisfy Expressions 1 and 2. Therefore, the separators of the Comparative Examples have a high probability a short occurring between the separator and the electrode by having the overhang area in which MD heat shrinkage and TD heat shrinkage are not relatively reduced or suppressed after impregnation with the electrolyte and heat exposure.

**Example 13**

A separator in which a first area and a second area (overhang area) were formed was manufactured by pressing only an area (area from one end of a polyethylene film in TD to 10 mm) of the polyethylene film (porosity: 30%, thickness: 7 μm) in which the overhang area was to be formed at 80 °C under a condition of "pressure 1" using a roll press.

**Examples 14 to 24**

Separators were manufactured in the same manner as in Example 1, with a difference that in Example 13, the processing conditions of the overhang area of the polyethylene film were changed as illustrated in Table 2 below.
In Table 2 below, the units of each of TD and MD are mm, and the units of thickness are μm.

Table 2:

| | Processing conditions | | Overhang area | | | Overhang area after impregnation with electrolyte and heat exposure | | | Heat shrinkage rate (%) of overhang area after impregnation with electrolyte and heat exposure | | Thickness increase rate (%) of overhang area after impregnation with electrolyte and heat exposure |
|---|---|---|---|---|---|---|---|---|---|---|---|
| | Temperature | Pressure | T D | M D | Thickness | TD | MD | Thickness | TD | MD | |
| Example 13 | 80°C | Pressure 1 | 10 | 100 | 5.42 | 8.80 | 84.88 | 7.25 | 11.96 | 15.12 | 33.82 |
| Example 14 | 80°C | Pressure 2 | 10 | 100 | 5.16 | 8.83 | 85.14 | 6.86 | 11.68 | 14.86 | 32.99 |
| Example 15 | 80°C | Pressure 3 | 10 | 100 | 5.07 | 8.99 | 86.10 | 6.55 | 10.13 | 13.90 | 29.24 |
| Example 16 | 110° C | Pressure 1 | 10 | 100 | 5.40 | 9.22 | 89.88 | 6.52 | 7.82 | 10.12 | 20.70 |
| Example 17 | 110° C | Pressure 2 | 10 | 100 | 5.13 | 9.21 | 90.14 | 6.18 | 7.95 | 9.86 | 20.52 |
| Example 18 | 110° C | Pressure 3 | 10 | 100 | 5.05 | 9.30 | 90.60 | 6.00 | 7.03 | 9.40 | 18.72 |
| Example 19 | 120° C | Pressure 1 | 10 | 100 | 5.40 | 9.31 | 91.45 | 6.33 | 6.92 | 8.55 | 17.20 |
| Example 20 | 120° C | Pressure 2 | 10 | 100 | 5.12 | 9.33 | 91.54 | 6.27 | 6.74 | 8.46 | 22.42 |
| Example 21 | 120° C | Pressure 3 | 10 | 100 | 5.05 | 9.44 | 92.14 | 5.94 | 5.64 | 7.86 | 17.53 |
| Example 22 | 25°C | Pressure 1 | 10 | 100 | 5.43 | 8.30 | 79.38 | 7.82 | 17.03 | 20.62 | 44.09 |

(continued)

| | Processing conditions | | Overhang area | | | Overhang area after impregnation with electrolyte and heat exposure | | | Heat shrinkage rate (%) of overhang area after impregnatio n with electrolyte and heat exposure | | Thickness increase rate (%) of overhang area after impregnat ion with electrolyte and heat exposure |
|---|---|---|---|---|---|---|---|---|---|---|---|
| | Temp eratur e | Pres sure | T D | M D | Thi ckn ess | TD | MD | Thic knes s | TD | MD | |
| Exa mple 23 | 25°C | Press ure 2 | 10 | 10 0 | 5.1 9 | 8.3 4 | 79.5 9 | 8.18 | 16.5 8 | 20.4 1 | 57.47 |
| Exa mple 24 | 25°C | Press ure 3 | 10 | 10 0 | 5.0 8 | 8.6 1 | 81.0 5 | 7.36 | 13.8 78 | 18.9 5 | 44.94 |

As illustrated in Table 2, the separators for a rechargeable lithium battery of the Examples satisfy Expressions 1 and 2. Therefore, the separators of the Examples can hinder or prevent a short between the separator and the electrode by having the overhang area in which MD heat shrinkage and TD heat shrinkage are reduced or suppressed after impregnation with the electrolyte and heat exposure.

**Example 25**

A separator was manufactured by processing a separator (thickness of polyethylene film: 7 $\mu$m, total thickness of a coating layer: 7 $\mu$m, the coating layer includes a ceramic and a heat-resistant binder) in which the coating layer was coated on both surfaces of the polyethylene film as a commercially available product at 140 °C under pressure 1. The separator was manufactured in the same manner as in Example 1.

**Example 26**

A separator was manufactured by processing a separator (thickness of polyethylene film: 7 $\mu$m, total thickness of a coating layer: 7 $\mu$m, the coating layer includes a heat-resistant layer including a ceramic and a heat-resistant binder and an adhesive layer stacked on the heat-resistant layer and including an adhesive binder) in which the coating layer was coated on both surfaces of the polyethylene film as a commercially available product at 140 °C under pressure 1.

**Comparative Example 4**

A separator (product name, manufacturer, thickness of polyethylene film: 7 $\mu$m, total thickness of a coating layer: 7 $\mu$m, the coating layer includes a ceramic and a heat-resistant binder) in which the coating layer was coated on both surfaces of the polyethylene film in Example 25 was used.

**Comparative Example 5**

A separator (thickness of polyethylene film: 7 $\mu$m, total thickness of a coating layer: 7 $\mu$m, the coating layer includes a heat-resistant layer including a ceramic and a heat-resistant binder and an adhesive layer stacked on the heat-resistant layer and including an adhesive binder) in which the coating layer was coated on both surfaces of the polyethylene film in Example 26 was used.

The heat shrinkage rate and thickness increase rate of the overhang area were each evaluated for the separators of the Examples and Comparative Examples in the same manner.

In Table 3 below, heat shrinkage rate 1 and thickness increase rate 1 are measured after being left at 130 °C for 1 hour in the heat shrinkage rate measurement, and heat shrinkage rate 2 and thickness increase rate 2 are measured after being left at 140 °C for 1 hour in the heat shrinkage rate measurement.

Table 3:

| | Processing conditions | | Heat shrinkage rate 1 after impregnation with electrolyte and heat exposure | | Thickness increase rate 1 (%) after impregnation with electrolyte and heat exposure | Heat shrinkage rate 2 after impregnation with electrolyte and heat exposure | | Thickness increase rate 2 (%) after impregnation with electrolyte and heat exposure |
| | Temperature | Pressure | TD (%) | MD (%) | | TD (%) | MD (%) | |
|---|---|---|---|---|---|---|---|---|
| Example 25 | 140°C | Pressure 1 | 2.10 | 3.80 | 4.08% | 13.30 | 11.30 | 19.81% |
| Example 26 | 140°C | Pressure 2 | 3.15 | 4.02 | 3.94% | 14.50 | 12.44 | 19.56% |
| Comparative Example 4 | - | - | 5.61 | 7.34 | 5.39% | 31.68 | 32.12 | 17.37% |
| Comparative Example 5 | - | - | 9.80 | 10.00 | 5.26% | 44.40 | 37.40 | 17.24% |

As illustrated in Table 3, the separators for a rechargeable lithium battery of the Examples satisfy Expressions 1 and 2. Therefore, the separators of the Examples can hinder or prevent a short between the separator and the electrode by having the overhang area in which MD heat shrinkage and TD heat shrinkage are reduced or suppressed after impregnation with the electrolyte and heat exposure.

A separator for a rechargeable lithium battery according to one example embodiment can hinder or prevent a short between the separator and an electrode by having an overhang area in which heat shrinkage is reduced or suppressed after impregnation with an electrolyte and heat exposure.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1.    A separator for a rechargeable lithium battery, the separator comprising:

a first area (31); and
a second area (32) located at each end of the first area (31),
wherein the second area (32) satisfies Expressions 1 and 2:

Expression 1: Thickness increase rate of second area (32) > MD heat shrinkage rate of second area (32); and

Expression: 1

Expression 2: Thickness increase rate of second area (32) > TD heat shrinkage rate of second area (32).

Expression: 2

2.    The separator of claim 1, wherein the first area (31) comprises an area disposed to face to an electrode, and the second area (32) comprises an overhang area.

3.    The separator of claim 1 or 2, wherein, in the second area (32), the thickness increase rate ranges from about (0, 5, 90) 5% to about (95, 99) 70%.

4.    The separator of claims 1 to 3, wherein, in the second area (32), the TD heat shrinkage rate ranges from about (0, 5, 90) 3% to about (95, 99) 20%, and the MD heat shrinkage rate ranges from about (0, 5, 90) 5% to about (95, 99) 25%.

5.    The separator of claims 1 to 4, wherein a thickness of the second area (32) ranges from about (0, 5, 90) 30% to about (95, 99) 90% of a thickness of the first area (31).

6.    The separator of claims 1 to 5, wherein the first area (31) and the second area (32) have different hazes.

7.    The separator of claims 1 to 6, wherein a thickness increase rate and a heat shrinkage rate of the first area (31) differ from the thickness increase rate and the heat shrinkage rate of the second area (32).

8.    The separator of claims 1 to 7, wherein the first area (31) and the second area (32) includes a porous substrate.

9.    The separator of claim 8, wherein the porous substrate has a porosity ranging from about (0, 5, 90) 5 % to about (95, 99) 95%.

10.    The separator of claim 8 or 9, wherein the porous substrate is one of an MD stretched film, a TD stretched film, and a MD and TD stretched film or wherein the porous substrate may be or includes a polyolefin-based substrate including a polyolefin.

11.    The separator of claims 8 to 10, wherein one or more of a heat-resistant layer and an adhesive layer are further formed on at least one surface of the porous substrate.

12.    A method of manufacturing the separator for a rechargeable lithium battery of claim 1, the method comprising: manufacturing the separator for a rechargeable lithium battery by pressing only a portion corresponding to a second area (32) of a separator film.

13.    The method of claim 12, wherein the pressing is performed under a linear pressure (1, 2, 3, 5, 10, 11, 100) ranging from about (0, 5, 90) 0.01 ton/cm to about (95, 99) 10 ton/cm.

14.    The method of claim 12 or 13, wherein:

        the separator film comprises a porous substrate, and
        the pressing is performed at a temperature below a melting temperature of the porous substrate.

15.    A rechargeable lithium battery comprising:

        a positive electrode;
        a negative electrode; and
        the separator for a rechargeable lithium battery of claims 1 to 11 located between the positive electrode and the negative electrode.

**FIG 1.**

L11
40

L12
30

**FIG 2.**

L11
40

L12
30

**FIG 3.**

L21

L11    L12    30

32    31    32

**FIG 4.**

40

30

32    31    32

FIG 5.

FIG 6.

FIG 7.

FIG 8.

FIG 9.

Europäisches
Patentamt

European
Patent Office

Office européen
des brevets

## EUROPEAN SEARCH REPORT

**Application Number**

EP 25 18 0216

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 216 359 A1 (LG ENERGY SOLUTION LTD [KR]) 26 July 2023 (2023-07-26) | 1-10, 12-15 | INV. H01M50/403 |
| Y | * figures 2-5 * | 11 | H01M10/0525 H01M50/417 |
| X | JP 2004 055272 A (JAPAN STORAGE BATTERY CO LTD) 19 February 2004 (2004-02-19) | 1-10, 12-15 | H01M50/463 H01M50/489 |
| A | * figures 2-5 * | 11 | H01M50/491 |
| Y | HUANG GUANGHUA ET AL: "Application of a New Polymer Particle Adhesive for Lithium Battery Separators", COATINGS, vol. 13, no. 1, 22 December 2022 (2022-12-22), page 21, XP093303668, CH ISSN: 2079-6412, DOI: 10.3390/coatings13010021 | 11 | |
| A | * Introduction * | 1-10, 12-15 | |

**TECHNICAL FIELDS SEARCHED (IPC)**

H01M

The present search report has been drawn up for all claims

| Place of search | Date of completion of the search | Examiner |
|---|---|---|
| The Hague | 7 October 2025 | Saad-Guermeche, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 0216

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | | Publication date |
|---|---|---|---|---|---|
| EP 4216359 | A1 | 26-07-2023 | CN | 116325334 A | 23-06-2023 |
| | | | EP | 4216359 A1 | 26-07-2023 |
| | | | US | 2023378611 A1 | 23-11-2023 |
| | | | WO | 2022270998 A1 | 29-12-2022 |
| JP 2004055272 | A | 19-02-2004 | NONE | | |

EPO FORM P0459

For more details about this annex : see Official Journal of the European Patent Office, No. 12/82

**EP 4 661 189 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240072491